# FASCICULE DE BREVET EUROPEEN

(11) **EP 2 546 597 B1**
(45) Date de publication et mention de la délivrance du brevet: **17.12.2014**
(21) Numéro de dépôt: 12290228.1
(22) Date de dépôt: 09.07.2012
(51) Int. Cl.: F41F 3/06, F41F 5/00, F41F 7/00, F41A 9/72, F42B 12/70

(54) **Système de leurrage par contre-mesure destiné à être monté sur un aéronef**
Täuschsystem zur Montage an einem Luftfahrzeug
Countermeasure masking system intended to be mounted on an aircraft

(30) Priorité: 12.07.2011 FR 1102194
(43) Date de publication de la demande: 16.01.2013
(73) Titulaire: MBDA France, 92350 Le Plessis-Robinson (FR)
(72) Inventeur: Le Croller, David, 75012 Paris (FR); Assouly, Jean-Luc, 94260 Fresnes (FR)
(74) Mandataire: Hauer, Bernard

(56) Documents cités:
- WO-A1-02/093102
- FR-A1- 2 906 359
- US-A1- 2003 192 992

## Description

La présente invention concerne un système de leurrage par contre-mesure destiné à être monté plus particulièrement, quoique non exclusivement, sur un aéronef tel qu'un avion ou un hélicoptère.

On sait que, pour répondre aux différentes menaces ennemies auxquelles un avion de chasse, par exemple, doit faire face, celui-ci est équipé, en plus des systèmes d'armes usuels offensifs, de systèmes de leurrage défensifs par contre-mesure, lesquels sont adaptés aux différentes menaces particulières. Ainsi, face à des missiles ennemis ayant des autodirecteurs électromagnétiques, à infrarouge, ou autres, des systèmes de leurrage spécifiques à ces menaces doivent être installés sur le fuselage et /ou les ailes de l'avion.

On comprend donc que de nombreux emplacements sont nécessaires à la fixation des systèmes de leurrage pénalisant, outre la masse de l'appareil, mais également l'emport d'autres équipements (armes, réservoirs,...). Par ailleurs, comme ces systèmes de leurrage sont structurellement et fonctionnellement différents en fonction des objectifs à atteindre et missions à effectuer, ils obligent ainsi à des études, développements et fabrications spécifiques, ce qui augmente d'autant les coûts de ces systèmes de leurrage à monter sur les aéronefs.

De plus, les projectiles utilisés dans ces systèmes ont souvent des formes extérieures différentes, hétérogènes et peu aérodynamiques, fonction de leur objectif, ce qui ne leur permet pas d'avoir ou de conserver une qualité de vol appropriée après leur éjection de ces systèmes, par exemple, pour les maintenir dans le flux aérodynamique de l'avion ou proche de celui-ci selon les dispositifs de contre-mesure en présence.

Par exemple, l'un des systèmes de leurrage présent sur les avions est un système, dénommé lance-paillettes, comportant des projectiles à dispositif de contre-mesure métallique et formant, après leur largage en paquets ou conteneurs, un nuage électromagnétique destiné à attirer un missile ennemi à autodirecteur électromagnétique.

Un tel système comporte des tubes juxtaposés, fixés par un cadre-support ou pod à la structure de l'aéronef et recevant, dans chacun d'eux, les uns à la suite des autres, les projectiles de contre-mesure destinés à être lancés, et un mécanisme de commande pour l'avance desdits projectiles à l'intérieur de chaque tube, et la sortie de celui-ci. De plus, de l'état de l'art le plus proche representé par le document FR 2 906 359 un autre système de leurrage est connu, qui comporte plusieurs tubes pour la réception de projectiles de contre-messure présentant chacun un dispositif de stabilisation aérodynamique à emprennages déployables.

La présente invention a pour but de pallier les inconvénients précités et concerne un système de leurrage par contre-mesure dont la conception permet notamment d'assurer une qualité de vol optimale aux projectiles et d'unifier les besoins en ces différents dispositifs de contre-mesure.

Selon l'invention, le système de leurrage par contre-mesure destiné à être installé sur un aéronef comporte :
- des projectiles de contre-mesure,
- au moins un tube pour la réception en série desdits projectiles de contre-mesure, et le lancement commandable successif de ceux-ci, et
- un mécanisme de commande pour l'avance des projectiles dans le tube,
- lesdits projectiles de contre-mesure comprennent, respectivement, des corps cylindriques extérieurs dimensionnellement identiques, reçus dans ledit tube et présentant chacun un dispositif de stabilisation aérodynamique à empennages déployables, prenant une position repliée dans le tube et une position déployée en sortie du tube, et
- ledit système comprend un module d'éjection des projectiles, à passage axial, agencé fixement dans le prolongement du tube, à l'opposé du mécanisme d'avance, et contenant successivement, par suite du mécanisme de commande, le projectile à éjecter issu du tube, par un dispositif d'éjection commandable lié audit module.

Ainsi, grâce à l'invention, on obtient des projectiles (leurres) cinématiques par la forme cylindrique du corps et les empennages associés, ce qui leur assure une qualité de vol optimale dès leur sortie du module. En effet, les corps cylindriques à empennages se stabilisent rapidement dans le flux aérodynamique. Et le module d'éjection au bout du tube assure le lancement successif des projectiles identiques.

Selon le choix, les projectiles à corps cylindrique agencés dans le tube et le module peuvent avoir des dispositifs de contre-mesure identiques ou différents pour au moins deux d'entre eux. Ainsi, grâce à l'invention, on peut certes regrouper, au sein d'un même système de leurrage, des projectiles avec des dispositifs de contre-mesure identiques, mais également des projectiles avec des dispositifs de contre-mesure différents adaptés ainsi à plusieurs menaces spécifiques. Dans ce cas, cela permet d'unifier les besoins de protection de l'aéronef en ces systèmes défensifs et de n'utiliser qu'un seul emplacement sur l'aéronef.

Un tel système commun libère les emplacements occupés par d'autres systèmes de leurrage spécifiques antérieurs, ce qui supprime les coûts de développement de chacun d'eux, diminue la masse et/ou autorise l'emport d'autres équipements. Un unique système peut être donc utilisé pour lancer, si on le souhaite, des leurres à finalités différentes de manière à faire face aux nombreux types de menaces possibles.

Selon un exemple de réalisation, le dispositif de contre-mesure de l'un des projectiles est du type électromagnétique actif, ce qui permet de contrer efficacement les menaces à autodirecteurs électromagnétiques.

Selon un autre exemple de réalisation, le dispositif de contre-mesure est du type infrarouge, ce qui permet de contrer efficacement les menaces à autodirecteurs infrarouges et, plus particulièrement, celles à autodirecteurs ayant des traitements de contre contre-mesure infrarouge de type cinématique et aux autodirecteurs à petit champ.

Avantageusement, en plus des empennages lui permettant de se stabiliser autour de l'aéronef une fois qu'il est éjecté, le projectile peut être équipé d'un propulseur logé dans le corps, lui permettant notamment de rester suffisamment longtemps à proximité immédiate ou alors de se porter à l'avant de l'aéronef.

Par ailleurs, ledit tube de réception des projectiles est au moins agencé approximativement parallèlement à l'axe longitudinal de l'aéronef. L'éjection des projectiles du système par l'intermédiaire du module s'effectue alors dans le flux aérodynamique.

Dans un mode particulier de réalisation, lesdits projectiles à corps cylindriques extérieurs sont montés dans des berceaux de support respectifs, identiques, reçus dans ledit tube et ouverts latéralement, et le module d'éjection à passage axial de réception du berceau portant le projectile associé, présente une ouverture latérale à travers laquelle est éjecté le projectile de son berceau par le dispositif d'éjection.

Dans ce cas, les berceaux avec leurs projectiles de forme et dimension identiques, sont reçus, sans adaptation particulière, dans le tube du système qui peut être avantageusement celui d'un système à lance-paillettes usuel.

Le module assure alors le lancement successif des projectiles de leurs berceaux respectifs et cela, de façon perpendiculaire au flux aérodynamique tout en étant restant parallèle à celui-ci, du fait que le tube (et, donc, les projectiles) est sensiblement parallèle à l'axe longitudinal de l'aéronef, c'est-à-dire parallèle au flux. Cela, ajouté aux empennages se déployant dès la sortie du module, permet une stabilisation rapide et optimale de chaque projectile éjecté de son berceau, par rapport à l'avion, et une réduction de la traînée, deux conditions essentielles pour réussir la capture de l'autodirecteur adverse.

Dans un mode préféré de réalisation, à l'intérieur du corps commun à chaque projectile, se trouvent, en plus du dispositif de contre-mesure concerné et des empennages déployables en aval du corps, une chambre en liaison avec le dispositif d'éjection du berceau, un mécanisme de verrouillage entre le corps et le berceau, et une connectique électrique pour les ordres de tir et autres données de fonctionnement du système.

Bien que l'on puisse envisager qu'il soit mécanique, fluidique, etc.., ledit dispositif d'éjection de chaque projectile est de préférence du type pyrotechnique et il est agencé dans l'un du berceau ou du projectile pour éjecter radialement ce dernier à travers l'ouverture latérale du module. Par exemple, la direction d'éjection du projectile se trouve dans une plage comprise entre plus ou moins 25° par rapport au plan horizontal de l'aéronef.

Dans une réalisation préférée, les empennages déployables du projectile se présentent sous la forme d'ailettes au moins au nombre de deux. Celles-ci sont reçues dans des fentes latérales du corps cylindrique et peuvent être maintenues en position repliée dans le berceau par une couronne rotative liée au corps et entourant les ailettes et, par suite de l'éjection du projectile et sous l'action d'un élément élastique, la couronne tourne pour présenter des ouvertures latérales de celle-ci en regard des fentes et entraîner le passage des ailettes de la position repliée à la position déployée.

On pourrait aussi envisager de réaliser les empennages en un alliage à mémoire de forme prenant une position repliée épousant le corps cylindrique, et une position déployée après éjection du module.

En particulier, entre le berceau et le module d'éjection, sont de plus prévus des moyens de maintien en position avec immobilisation axiale et transversale du berceau par rapport au module.

Les figures du dessin annexé feront bien comprendre comment l'invention peut être réalisée. Sur ces figures, des références identiques désignent des éléments semblables.
La figure 1 est une vue de dessus d'un aéronef équipé d'un système de leurrage avec projectiles à contre-mesure conforme à l'invention.
La figure 2 représente, en perspective partiellement écorchée, un exemple de réalisation du système de la figure 1 contenant les projectiles de contre-mesure.
Les figures 3A à 3D montrent schématiquement des exemples de projectiles identiques avec des dispositifs de contre-mesure différents.
La figure 4 montre, en perspective agrandie, le module d'éjection du système de leurrage de l'invention.
La figure 5 est une perspective d'un berceau de support d'un projectile.
La figure 6 est une coupe transversale du berceau et du projectile associé, montrant le mécanisme de verrouillage entre eux et le dispositif d'éjection du projectile.
La figure 7 représente, en perspective partielle et écorchée, la couronne de maintien des empennages de chaque projectile en position repliée.
La figure 8 représente, en perspective schématique partielle, la connectivité entre le berceau, le projectile et le module.
La figure 9 représente, en perspective schématique, la séparation et le lancement d'un projectile du berceau correspondant du module, et la sortie du berceau dudit module.

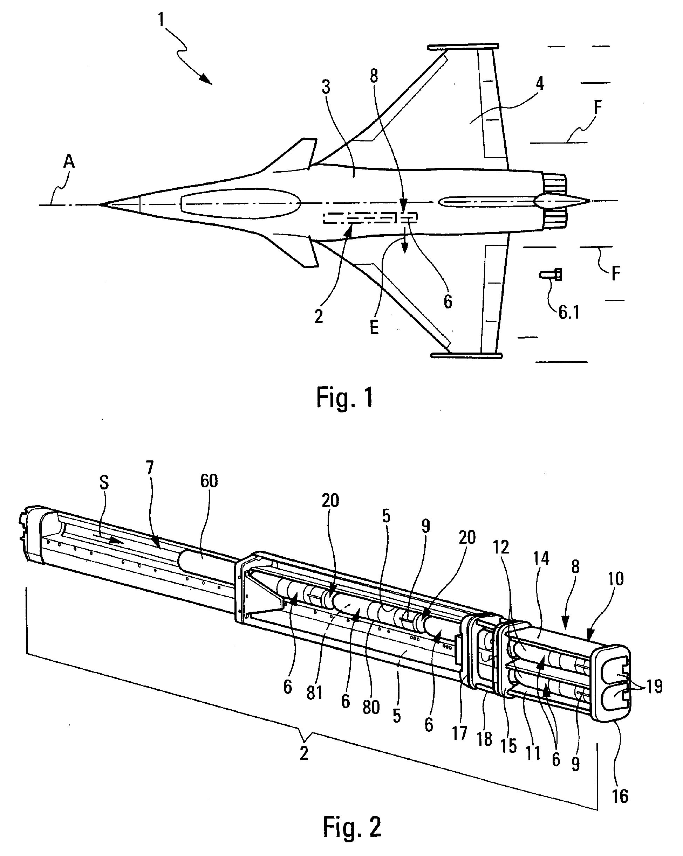

Comme on le voit sur la figure 1, l'aéronef tel qu'un avion de chasse 1 est équipé d'un système de leurrage par contre-mesure 2 schématiquement représenté en trait mixte et fixé, par un cadre-support approprié ou pod non illustré, sous le fuselage 3 de l'avion. L'axe longitudinal A de ce dernier est également indiqué de même que le flux aérodynamique entre l'avion et l'air, symbolisé par des flèches F. Le système pourrait bien entendu se trouver en tout autre emplacement possible de l'avion.

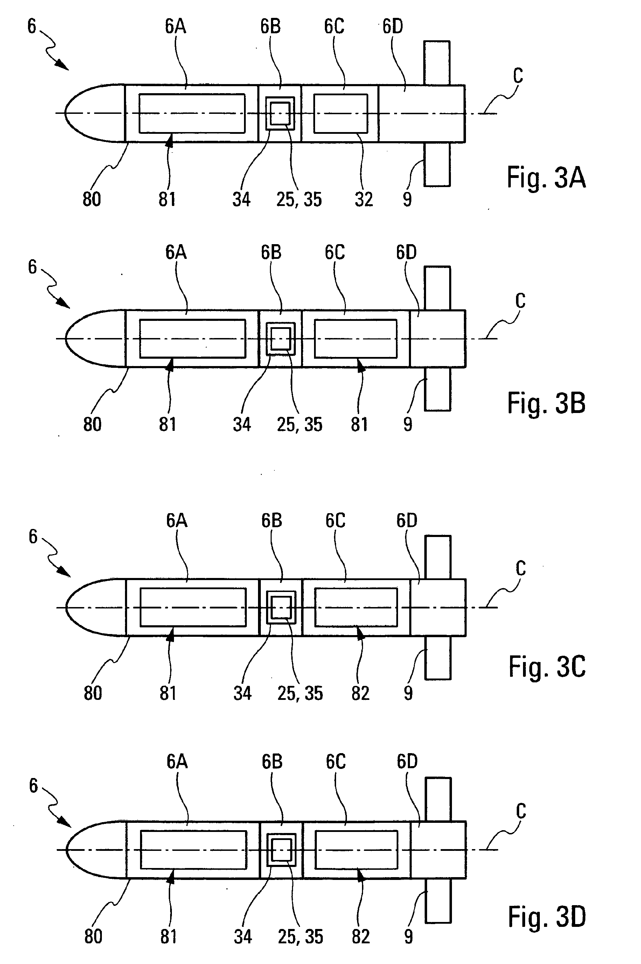

Pour que l'avion 1 puisse faire face aux différentes menaces rappelées précédemment, les projectiles 6 montés dans le système 2 peuvent avoir des dispositifs de contre-mesure différents susceptibles de couvrir les nombreuses menaces existantes de diverses origines (autodirecteurs électromagnétiques, infrarouges, etc..), ce qui permet de n'utiliser ainsi qu'un seul et même système 2 pour lancer ces projectiles 6. Cependant, les projectiles pourraient avoir un même dispositif de contre-mesure ou un quelconque panachage de différents dispositifs de contre-mesure. Pour cela, il convient notamment, selon l'invention, de rendre commun les différents projectiles pour qu'ils puissent être lancés à partir de ce système 2 et, à cet effet, ceux-ci sont conçus pour être dimensionnellement identiques extérieurement. Ils comprennent alors un même corps cylindrique externe 80 d'axe C, à l'intérieur duquel sont prévues différentes parties, comme on le verra plus en détail en regard des figures 3A à 3D, et en particulier les différents dispositifs de contre-mesure 81. Et chaque corps cylindrique 80 est muni d'un dispositif à empennages déployables arrière 9 permettant au projectile, une fois lancée comme on le verra ultérieurement, d'acquérir une stabilité aérodynamique dans le flux et, donc, une qualité de vol appropriée pour sa mission.

Le système de leurrage 2 peut être alors réalisé à partir d'un lance-paillettes usuel qui comporte, dans l'exemple de réalisation illustré sur les figures 2, 4-9, deux tubes cylindriques juxtaposés 5 liés au cadre-support et à l'intérieur desquels sont logés successivement les projectiles 6 pour leurrer les menaces ennemies, et des mécanismes de commande 7 pour l'avance des projectiles dans les tubes.

Pour utiliser les projectiles 6 à dispositifs de contre-mesure 80 pouvant être tous différents, le système 2 comporte, dans cet exemple de réalisation, des berceaux de support 20 des projectiles reçus dans les tubes et ouverts latéralement, et un module d'éjection 8 des projectiles rapporté en bout des tubes. Et, comme on le voit sur les figures 1 et 2, le système de leurrage 2 de forme allongée, imposée par les tubes cylindriques 5 et l'extension des mécanismes de commande 7 et du module 8, est fixé de façon sensiblement parallèle à l'axe longitudinal A de l'avion, et l'éjection de chaque projectile 6 est conçue pour qu'elle soit orthogonale (selon la flèche E) à l'axe A avec le projectile 6 agencé dans le flux aérodynamique F, c'est-à-dire parallèlement à celui-ci, comme on le verra ultérieurement.

Lorsque le système 2 est installé sur l'avion, le module d'éjection 8 se trouve à l'arrière ou en aval du système, de façon que les projectiles 6 sortent du module avec leur nez du corps 80, de forme ogivale, dans le flux F, tourné vers l'avant de l'avion et les empennages 9 à l'opposé. Un projectile 6.1 précédemment lancé est représenté dans la configuration ci-dessus sur la figure 1.

Avec un tel agencement du système 2 dans l'axe A de l'avion, et une telle éjection orthogonale rendue possible par les berceaux individuels 20 et le module d'éjection 8, chaque projectile 6 est directement orienté dans le flux aérodynamique F avec une traînée réduite et une stabilité optimale par les empennages déployés. Bien entendu, l'éjection des projectiles à corps cylindrique pourrait se faire dans l'axe du ou des tubes du système, parallèlement à l'axe longitudinal A de l'avion.

Le module 8 fait ainsi office d'interface de tir unique pour l'éjection successive des projectiles contenus dans les tubes de stockage 5.

Avant d'en venir à la description détaillée du module, des berceaux et des dispositifs, mécanismes et autres du système 2, on se réfère tout d'abord aux projectiles 6 à dispositifs de contre-mesure différents 81 susceptibles d'être embarqués dans le système.

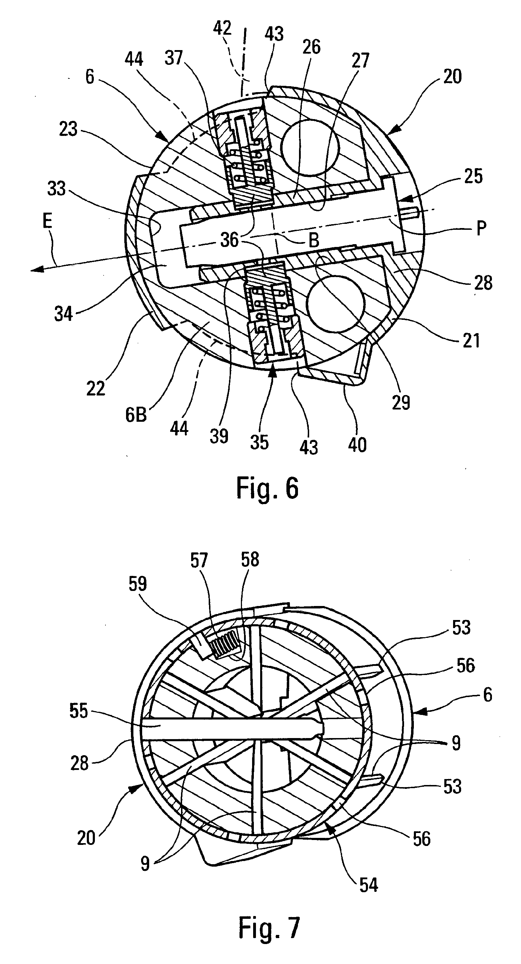

Les projectiles 6 représentés schématiquement sur les figures 3A à 3D et destinés à être montés dans les berceaux individuels, comportent chacun plusieurs parties distinctes. Ainsi, l'intérieur du corps cylindrique commun 80 à chaque projectile 6 se compose de différentes parties distinctes telles que, d'amont en aval du corps, une partie 6A dans laquelle se trouve notamment le dispositif de contre-mesure souhaité 81, une partie 6B dans laquelle se trouvent notamment le dispositif d'éjection 25 (figure 6) du projectile et le mécanisme de verrouillage 35 de celui-ci, une partie 6C dans laquelle se trouve en particulier la source d'énergie 32 du projectile alimentant ses différents composants, et une partie 6D dans laquelle se trouvent les empennages 9.

Le premier projectile 6, schématisé figure 3A, est destiné à la lutte contre les menaces à autodirecteurs électromagnétiques.

Dans ce cas, il comprend, dans la partie 6A du corps 80, un dispositif de contre-mesure 81 incluant un système d'écoute de la menace, d'analyse et de génération directe de la forme d'onde de brouillage FOB. Le dispositif 81 peut comporter une centrale inertielle permettant de connaître les variations de vitesse du leurre pour autoriser le système de génération de la FOB à synthétiser les modes adaptés. Un calculateur est associé à la centrale.

La partie 6B comprend principalement la chambre de combustion 34 du dispositif d'éjection 25 du projectile qui est alors du type pyrotechnique et qui est porté par le berceau de support correspondant ,comme on le verra ultérieurement. La partie 6B inclut aussi la connectivité électrique nécessaire au bon fonctionnement des composants constituant le projectile.

Concernant la partie 6C du projectile de la figure 3A, elle comporte la source d'énergie 32 qui est par exemple une pile, tandis que la partie 6D inclut notamment le dispositif de stabilisation aérodynamique à empennages 9 du projectile, lesquels sont passés de la position repliée à la position déployée, comme on le verra plus en détail ultérieurement.

Le deuxième projectile 6 schématisé sur la figure 3B est destiné à contrer les menaces ayant des autodirecteurs infrarouges et notamment ceux ayant des traitements de contre contre-mesure et ceux à petit champ.

Le dispositif de contre-mesure 81 situé dans la partie 6A du corps 80 comporte une ou plusieurs charges pyrotechniques assurant, lorsqu'elles sont initiées, l'émission infrarouge souhaité. La charge dans le projectile peut être une charge à signature infrarouge maximale, une charge multi-spot créant une confusion au niveau de l'autodirecteur de la menace, une charge pyrophorique créant une signature infrarouge étendue ou un effet de masquage, un fumigène créant un masquage de l'avion, une charge émettant dans le rayonnement visible pour l'entraînement des forces, une charge électro-optique pour masquer l'avion tireur vis-à-vis des conduites de tir ennemies. Ces charges sont munies de retardateurs pyrotechniques permettant l'allumage à l'instant souhaité de celles-ci.

Dans la chambre 34 de la partie 6B du projectile se trouvent notamment le dispositif d'éjection 25 du projectile et le mécanisme de verrouillage 35 de celui-ci au berceau, ainsi que la connectivité électrique, comme pour le projectile précédent. Dans la partie 6C est agencée une autre charge pyrotechnique qui peut être différente ou non de celle se trouvant dans la partie 6A. Et enfin, dans la partie arrière 6D sont prévus les empennages de stabilisation aérodynamique 9 du projectile, identiques à ceux de la réalisation précédente.

Le troisième projectile 6 schématisé sur la figure 3C est destiné à émettre un signal infrarouge de nature à contrer les autodirecteurs infrarouges, et plus particulièrement ceux ayant des traitements de contre contre-mesure de type cinématique privilégiant les poursuites sur front avant.

Pour cela, dans la partie avant 6A du corps cylindrique 80 se trouve le dispositif de contre-mesure 81 sous forme d'une ou de charges pyrotechniques assurant l'émission infrarouge, telles que celles énumérées en liaison avec le deuxième projectile. Des retardateurs pyrotechniques sont aussi prévus et l'instant souhaité pour initier la charge pourra être optimisé par programmation de la mission au sol et en fonction notamment de la direction d'arrivée de la menace.

Dans la partie 6B, on retrouve la chambre 34, le dispositif d'éjection 25, le verrouillage 35 et la connectivité électrique équipant les projectiles précédents, tandis que, dans la partie 6C, est agencé un propulseur miniaturisé 82 permettant au projectile 6, après son éjection du berceau, de rester suffisamment longtemps à proximité immédiate ou alors de se porter à l'avant de l'aéronef et de faire face à la menace. On peut prévoir aussi un dispositif de régulation de la traînée pour conserver un rapport poussée/traînée constant et, donc, une efficacité optimale du leurrage dans tout le domaine de vol de l'avion. Enfin, la partie arrière 6D comporte les empennages déployables 9.

Le quatrième projectile 6 schématisé sur la figure 3D est destiné à emporter des paquets de paillettes ajustées en bandes pour constituer, après largage, un nuage électromagnétique tout autour de l'avion, et leurrer les menaces concernées.

Aussi, la partie avant 6A du corps cylindrique 80 comporte le dispositif de contre-mesure 81 constitués des paquets de paillettes dans une ou plusieurs bandes, semblables aux paquets insérés dans les lance-paillettes actuels. Des retardateurs pyrotechniques ou électriques peuvent être prévus pour l'allumage à un instant souhaité, programmée, des paquets de paillettes et la diffusion de celles-ci. Un propulseur miniaturisé 82 se trouve également dans la partie 6C du corps cylindrique, là aussi pour permettre au projectile de leurrage de se porter à l'avant de l'avion.

Et dans les parties 6B et 6D du projectile sont prévus, pour la partie 6B, la chambre 34, le dispositif d'éjection 25, le verrouillage 35 et la connectivité électrique, et pour la partie 6D , les empennages déployables 9.

D'autres conceptions de projectiles pourraient être envisagées.

On décrira ci-après la structure et le fonctionnement du système de leurrage 2 avec ses projectiles identiques qui peuvent être à leurrages différents.

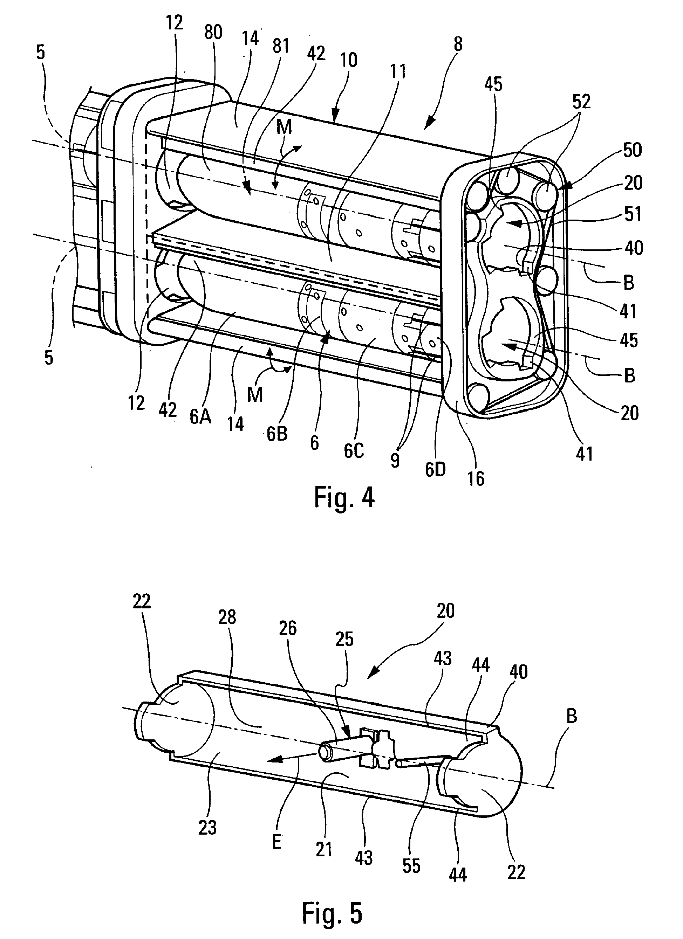

Dans le mode de réalisation illustré sur la figure 4, le module 8 comprend un corps 10 qui est rapporté fixement dans le prolongement des deux tubes juxtaposés 5 en ayant une forme sensiblement parallélépipédique, correspondante à celle des tubes dans leur cadre-support, et qui présente une ouverture latérale 11 à travers laquelle peuvent être éjectés les projectiles. Le corps 10 présente deux passages axiaux, parallèles 12, venant, après fixation du module 8 dans le prolongement coaxial respectif des tubes 5. Ces passages 12 sont entourés d'une paroi latérale 14 qui peut s'ouvrir de manière à découvrir l'ouverture latérale 11 comme on le verra ultérieurement.

Structurellement, le corps 10 se termine par deux parois transversales d'extrémité 15 et 16 dont l'une, 15, est rapportée directement à la paroi transversale en regard 17 terminant les deux tubes, par l'intermédiaire d'entretoises 18 de reprise d'efforts d'éjection, et dont l'autre, 16, termine le module 8 en étant munie de volets articulés mobiles 19 formant trappe et rappelés spontanément en position de fermeture protégeant l'intérieur du module vis-à-vis de l'environnant extérieur. Les deux passages axiaux 12 s'étendent tout du long du corps et communiquent avec les deux tubes 5 d'un côté, et sont obturés, de l'autre côté, par les volets 19.

Avantageusement, les projectiles 6, de forme extérieure identique imposée par leur corps cylindrique 80, sont reçus respectivement dans les berceaux individuels 20 lesquels sont montés dans les tubes de stockage juxtaposés 5 et dans le module 8. Dans l'exemple illustré en figure 2, les tubes identiques 5 comprennent chacun trois projectiles agencés en série, et un quatrième projectile est déjà logé dans le passage axial correspondant 12 du module, prêt à être tiré.

Un tel système de lancement 2 comporte donc huit projectiles identiques. Bien évidemment, il pourrait avoir un seul tube ou plus de deux tubes avec des capacités différentes d'emport de projectiles sans sortir du cadre de l'invention. Le module d'éjection 8 comprend, quant à lui, un nombre de passages correspondant au nombre de tubes, dans chaque passage 12 étant amené un seul projectile par l'intermédiaire du mécanisme de commande d'avance 7 situé de l'autre côté du tube et qui sera décrit ultérieurement. Dans chaque tube et passage correspondant du module se trouve ainsi une série de quatre projectiles pouvant avoir des dispositifs de contre-mesure différents. Les tubes comportent, par exemple, deux séries identiques de projectiles 6. On comprend donc que l'on pourrait agencer dans les tubes toutes combinaisons possibles de projectiles de contre-mesures avec, par exemple, deux ou plusieurs d'entre eux pouvant être identiques avec le même dispositif de contre-mesure, et les autres projectiles avec des dispositifs différents, etc.., ou la totalité d'entre eux identiques.

Le berceau de support 20 montré schématiquement sans le projectile sur la figure 4 comprend une enveloppe cylindrique 21 d'axe B, couvrant un secteur angulaire au plus diamétral et terminée par deux parois transversales d'extrémité 22. La distance de séparation entre les deux parois 22 correspond sensiblement à la longueur du projectile 6 entre son nez amont et l'empennage aval, et le diamètre de l'enveloppe de réception 21 correspond au diamètre extérieur du corps cylindrique 80 du projectile 6. Comme l'enveloppe ne couvre qu'un secteur angulaire inférieur à 180°, le projectile 6 peut être facilement monté par l'ouverture latérale 23 laissée par le berceau et, par suite, être éjecté de celui-ci au travers de l'ouverture latérale 11 du corps du module, comme on le verra plus tard.

Chaque berceau 20 comprend, outre la réception du projectile, plusieurs autres fonctions telles que notamment le maintien et l'indexage du berceau dans le passage correspondant du module et le tube dans une position angulaire appropriée, le verrouillage du projectile dans le berceau et l'éjection du projectile hors du berceau.

Le dispositif d'éjection 25 du projectile est, dans cet exemple, du type pyrotechnique, commandable et est intégré à chaque berceau 20. Comme on le voit sur les figures 5 et 6, il est logé dans une cavité cylindrique 27 d'un appendice radial (ou excroissance) 26 issu du fond 28 de l'enveloppe et relié électriquement à une commande non représentée. Dans cet appendice saillant 26 s'engage la partie 6B des projectiles 6. Pour cela, un trou borgne 29 est ménagé dans cette partie 6B du projectile, et définit entre le fond 33 du trou borgne 29 et l'appendice 26, la chambre de combustion des gaz 34 issus du dispositif pyrotechnique pour permettre l'éjection du projectile selon une direction bien déterminée (flèche E) correspondant à l'axe P de l'appendice cylindrique 26, et qui passe par le centre de l'ouverture latérale 23 du berceau.

Pour maintenir le projectile en position sur le berceau 20, tant que le dispositif pyrotechnique 25 est inactif, un mécanisme de verrouillage 35 est prévu. On voit, sur la figure 6, qu'il se compose de deux doigts de verrouillage 36 alignés coaxialement et disposés diamétralement de part et d'autre de l'appendice 26, perpendiculairement à l'axe P. Structurellement, les doigts 36 sont symétriquement soumis à l'action de ressorts 37 en appui, du côté opposé aux doigts, contre des bagues 38 fixées à la partie médiane 30 du projectile. Ces doigts 36 s'engagent ainsi, sous l'action des ressorts 37, dans des évidements 39 prévus dans l'appendice 26 et verrouillent ainsi le projectile 6 dans le berceau 20.

Par ailleurs, comme le montrent les figures 4, 5 et 6, chaque berceau 20 comporte en périphérie une excroissance longitudinale 40, formant languette, qui s'engage dans une rainure de réception correspondante 41 prévue dans le passage axial 12 du module et le tube 5. Ainsi, le berceau et son projectile sont-ils orientés dans la position angulaire appropriée.

Il est également prévu un maintien en positions transversale et axiale des berceaux 20 dans le module d'éjection 8. Par exemple, deux rebords parallèles coudés 42 sont prévus le long du corps 10 délimitant les passages axiaux 12, figures 4 et 6, et servent de zones d'appui à chaque bord échancré concerné 43 de l'enveloppe 21 des berceaux, assurant le maintien transversal de ceux-ci perpendiculairement à leur axe longitudinal B.

Concernant le maintien axial, selon cet axe longitudinal, de chaque berceau 20 par rapport au passage axial correspondant 12 du corps, il peut être obtenu par un volet pivotant, non représenté, prévu sur la paroi transversale 16 pour bloquer axialement le berceau ou libérer le passage pour sa sortie. Ou, dans cet exemple, par la différence de formes transversales entre le berceau 20 et le projectile 6, ce qui empêche la sortie axiale du berceau tant que le projectile se trouve dans celui-ci.

En effet, les parois transversales 22 du berceau 20 présentent une forme circulaire avec des échancrures 44 et doivent passer (figures 4, 5, 9), lors de leur introduction dans le passage axial et après l'éjection du projectile comme on le verra ultérieurement, à travers une découpe appropriée correspondante 45 prévue dans les parois transversales 15 et 16 du module (la paroi 16 avec ses découpes 45 est notamment visible sur la figure 4). Or, la section transversale du projectile maintenu entre les deux parois transversales 22, a une forme circulaire qui déborde des échancrures 44 des parois 22 du berceau (comme le montre le trait pointillé des échancrures 44 sur la figure 6) et, donc, de la découpe 45 des parois 15, 16 du corps, si bien que l'arrière du projectile 6 s'applique, par ses endroits qui débordent des échancrures, en butée axiale contre la paroi transversale 16 du corps. Ainsi, tout mouvement axial du berceau 20 par rapport au corps 10 tant que le projectile 6 se trouve dans le berceau, est empêché.

L'éjection du projectile 6 est imposée par l'indexage angulaire préalablement défini et par l'orientation de l'appendice radial 26.

Aussi, dans cet exemple, l'axe d'éjection E (axe P de l'appendice) forme un angle de 20° par rapport au plan horizontal de l'avion de manière à éjecter le projectile sous l'avion. Bien entendu, l'angle pourrait être différent selon le projectile utilisé, l'emplacement du système, etc... et pourrait être compris dans une fourchette de plus ou moins 25° par rapport au plan horizontal avion, au-dessous ou au-dessus du plan.

Par ailleurs, pour limiter les dispersions du projectile lors de l'éjection, il est préférable que le centre de poussée du dispositif pyrotechnique 25 se trouve au centre de gravité du projectile 6 à éjecter.

De plus, comme le montre la figure 4, on voit que la paroi latérale 14 du module est mobile et est ouverte pour présenter les projectiles à éjecter et ainsi définir l'ouverture latérale d'éjection 11. Pour cela, la paroi latérale 14 est déplacée par un mécanisme d'entraînement 50 à courroie-poulies ou chaîne-pignons ou engrenages 51-52, logé dans la paroi transversale aval 16 du module 8. La commande de ce mécanisme 50 implique, selon le sens donné (flèches M), l'ouverture de la paroi 14 à la manière d'un volet rigide rotatif, pour définir l'ouverture 11 comme sur la figure 4, ou la fermeture de la paroi obstruant l'ouverture 11 tant que le module 8 du système de lancement 2 est inactif. La paroi peut être également sous forme d'un rideau souple, par exemple, en matériau composite.

Comme les projectiles 6 sont équipés du dispositif de stabilisation aérodynamique à empennages arrière 9, il est nécessaire de maintenir ces derniers en position repliée, effacée, lorsque les projectiles sont dans leurs berceaux respectifs 20, ce qui évite les problèmes de frottement dans les tubes, et de libérer les empennages pour qu'ils passent en position déployée dès l'éjection des projectiles 6 pour les stabiliser.

Pour cela, comme le montre la figure 7, les empennages 9 sont des ailettes et sont, dans cet exemple, au nombre de six (ce nombre pourrait être bien sûr différent et est au moins égal à deux), régulièrement réparties angulairement autour de la partie arrière circulaire 6D du corps 80 du projectile. Elles sont maintenues en position repliée dans des fentes radiales 53 prévues dans la partie 6D, par une couronne rotative 54 entourant celle-ci. Cette couronne 54 est immobilisée dans la position illustrée (empennages 9 repliés) par une broche radiale 55 issue du fond 28 de chaque berceau 20 (figures 5 et 7) et parallèles à l'appendice 26 du dispositif pyrotechnique 25. Cette broche 55, lors du montage du projectile, traverse la couronne 54 et la partie arrière du projectile. La couronne présente également des ouvertures 56 qui sont destinées à venir en regard des fentes 53 par suite de la rotation angulaire de la couronne 54 sous l'action d'un ressort 57 prévu radialement entre un évidement 58 de la partie arrière 46 et la couronne, lorsque le projectile 6 est éjecté en ayant quitté la broche 55 et donc le berceau 20.

En ce qui concerne les mécanismes de commande et d'avance 7 des projectiles 6, ils sont chacun du type à piston 60 (ou à moteur avec pignon-crémaillère) coulissant dans le tube respectif 5 sous l'action d'une source fluidique commandable en communication avec la chambre du tube 5 et symbolisée par une flèche S sur la figure 2. On remarque la simplicité de réalisation de ces mécanismes qui procurent une fiabilité de fonctionnement importante.

Aussi, lorsque ces mécanismes 7 sont successivement actionnés, pour permettre l'avance des projectiles alignés, le berceau 20 du module 8 à partir duquel a été éjecté le projectile, est chassé du passage axial et traverse le volet formant trappe 19, prévu sur la paroi transversale 16.

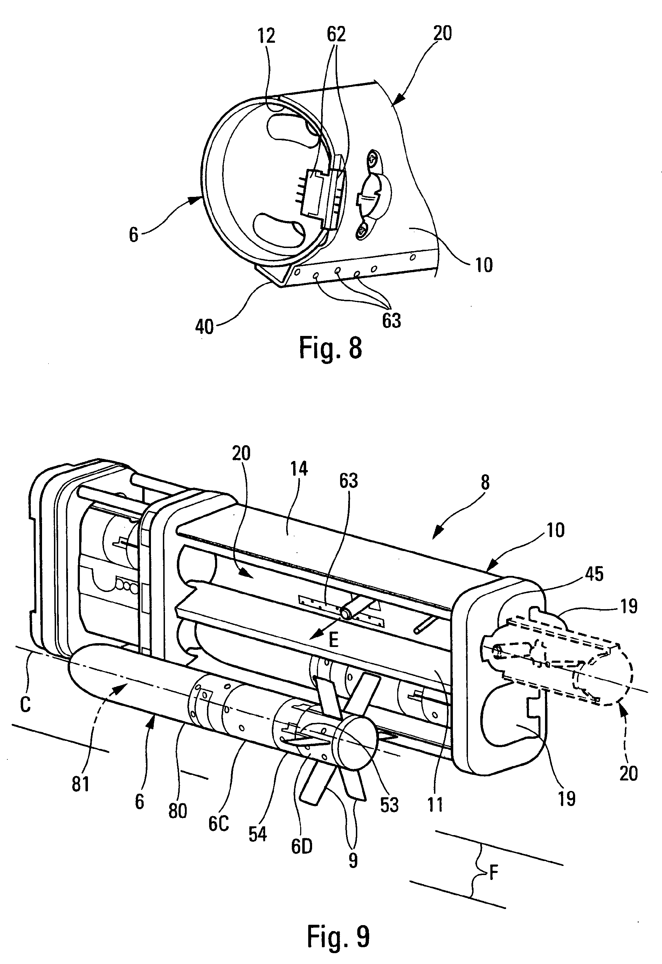

Par ailleurs, pour assurer le bon fonctionnement du système et commander l'éjection des projectiles, chaque berceau 20 est équipé d'une connectique électrique. En particulier, comme le montre schématiquement et partiellement la figure 8, une première connexion électrique par connecteurs 62 est prévue entre le connecteur lié au fond 28 de l'enveloppe 21 de chaque berceau, et le connecteur présent sur le projectile notamment pour commander le dispositif d'éjection 25 situé en partie médiane du projectile. Cette connexion est rendue opérationnelle lors du montage du projectile dans le berceau-support 20.

Une seconde connexion électrique est prévue entre chaque berceau 20 et le corps 10 du module. Cette connexion s'effectue à chaque mise en place par coulissement d'un berceau 20 avec le projectile associé dans le passage axial concerné 12 du corps du module d'éjection 8. Et elle permet d'établir la liaison électrique avec les nombreux équipements électriques concernés du projectile 6 et de garantir aussi le positionnement correct du berceau dans le module.

Dans cet exemple, la seconde connexion comporte des contacts télescopiques (non visibles sur les figures) prévus dans la paroi du corps 10 du module délimitant chaque passage axial 12 et coopérant avec des points ou plots conducteurs 63 prévus en correspondance sur le berceau, par exemple, le long de l'excroissance longitudinale 40 de chacun d'eux, comme on le voit sur la figure 7. Pour assurer la connexion entre les plots 63 et le connecteur correspondant 62 du berceau, un circuit souple non représenté est intégré au berceau et relie les plots au connecteur.

On remarque aussi que, comme le « rechargement » des berceaux 20 dans le module 8 s'effectue de façon linéaire, les contacts et les points 63 sont répartis sur plusieurs lignes parallèles et en étant de plus espacés d'un pas variable. Cela permet d'être sûr qu'aucune ligne électrique n'est fermée pendant la translation du berceau dans le passage du module. En position terminale (berceau engagé dans le module), les lignes sont toutes fermées, ce qui, du point de vue de la sécurité, est essentiel par suite de l'utilisation d'un dispositif d'éjection pyrotechnique.

Le fonctionnement du système de lancement 2 tel que décrit ci-dessus ne soulève pas de difficultés majeures et se déroule de la façon suivante.

On considère, comme le montre la figure 2, que les tubes 5 et les passages axiaux 12 du module d'éjection 8 contiennent les berceaux 20 avec les corps cylindriques 80 des projectiles 6, ceux-ci ayant des dispositifs de contre-mesure 81 notamment distincts, tels que ceux décrits précédemment. Le lancement concerne, par exemple, le projectile 6 situé dans le passage axial 12 qualifié de supérieur, du module 8.

Les différentes connexions sont établies. La paroi latérale mobile 14 du module se déplace sous la commande du mécanisme d'entraînement 50, ce qui découvre l'ouverture latérale 11 comme le montre la figure 4. Bien que, dans la représentation illustrée, la paroi latérale ouverte 14 laisse apparaître les deux projectiles, elle ne pourrait montrer que le projectile supérieur.

Lors de la mise à feu du dispositif pyrotechnique 25, figure 6, sur commande de déclenchement, les gaz de propulsion atteignent la chambre 34 puis les doigts de verrouillage 36 qui sont repoussés hors des évidements 39 de l'appendice radial 26. Cela entraîne la compression des ressorts 37 en appui contre les bagues 38. De la sorte, le projectile 6 est libéré du berceau-support 20 et est éjecté radialement de celui-ci selon la flèche E dont la direction est imposée par l'orientation angulaire choisie de l'appendice 26.

Comme on le voit sur la figure 9, le projectile 6 traverse l'ouverture latérale 11 du module 8 et on remarque également que, simultanément à la sortie du projectile du berceau, se produit la séparation de la couronne de maintien 54 des empennages 9, de la broche radiale 55 issue du fond du berceau 20.

Ainsi, sous l'action du ressort 57 agissant sur l'ergot 59, la couronne 54 tourne angulairement par rapport à la partie arrière 46 du projectile jusqu'à ce que les ouvertures 56 soient simultanément alignées avec les fentes de réception 53 des empennages à ailettes 9. Par l'action élastique de ressorts associés aux articulations non illustrées des empennages, ces derniers passent spontanément et de façon synchronisée de leur position repliée à leur position déployée, comme le montre la figure 9. Et cela pratiquement dès le lancement du projectile hors du module. Ces mêmes ressorts maintiennent les empennages en position déployée.

Ainsi, par l'agencement des tubes du système 2 parallèlement à l'axe longitudinal A de l'avion 1 et par le module 8 à ouverture latérale, le projectile 6 (et par suite tous les autres) est éjecté perpendiculairement à l'axe A tout en ayant l'axe C du corps 80 parallèle à celui-ci. Le projectile est alors orienté correctement et directement dans le sens du flux aérodynamique F, ce qui lui assure avec les empennages déployés une stabilisation rapide et sûre dans le flux avec une traînée minimale. Le projectile cinématique éjecté 6 acquiert ainsi une qualité de vol optimale et est alors apte à jouer son rôle de contre-mesure pour leurrer la menace détectée.

Après l'éjection du projectile se produit celle du berceau-support 20 resté dans le passage axial 12. Pour cela, le mécanisme 7 à piston 60 est actionné, ce qui provoque le coulissement de la série de berceaux alignés 20 dans le tube 5 vers le module 8. Le berceau vide traverse la découpe correspondante 45 de la paroi transversale aval 16 du module et pousse la trappe 19 de celui-ci comme le montre le trait pointillé sur la figure 9. Et cela, jusqu'à ce que le berceau suivant 20 avec son projectile soit totalement reçu dans le passage axial libre 12 du module, avec le projectile venant en butée axiale contre la paroi transversale du corps 10.

Un autre tir avec le projectile suivant 6 dans le même tube 5 ou dans l'autre tube parallèle, avec un dispositif de contre-mesure différent (ou non) 81, peut être alors déclenché, toujours à partir du même module qui fait office d'interface de tir commune pour les projectiles stockés. L'ensemble des projectiles peut être tiré successivement de façon à contrer efficacement les différentes menaces et à protéger l'avion de celles-ci.

## Revendications

1. Système de leurrage par contre-mesure destiné à être installé sur un aéronef comportant :
- des projectiles de contre-mesure (6),
- au moins un tube (5) pour la réception en série desdits projectiles de contre-mesure, et le lancement commandable successif de ceux-ci, et
- un mécanisme de commande (7) pour l'avance des projectiles dans le tube,
- lesdits projectiles de contre-mesure (6) comprenant, respectivement, des corps cylindriques extérieurs (80) dimensionnellement identiques, reçus dans ledit tube et présentant chacun un dispositif de stabilisation aérodynamique à empennages déployables (9), prenant une position repliée dans le corps lorsque le projectile est dans le tube, et une position déployée en sortie de celui-ci, et
- ledit système comprenant un module d'éjection des projectiles (8), à passage axial (12), agencé fixement dans le prolongement du tube, à l'opposé du mécanisme de commande (7), et contenant successivement, par suite du mécanisme de commande, le projectile à éjecter (6) issu du tube, par un dispositif d'éjection commandable (25) lié audit module.

2. Système selon la revendication 1,
**caractérisé par le fait que** les projectiles (6) à corps cylindrique (80) logés dans le tube et le module ont des dispositifs de contre-mesure (81) identiques ou différents pour au moins deux d'entre eux.

3. Système selon l'une des revendications 1 et 2, **caractérisé par le fait que** le dispositif de contre-mesure (81) d'au moins l'un des projectiles est du type électromagnétique actif.

4. Système selon l'une des revendications 1 à 3,
**caractérisé par le fait que** le dispositif de contre-mesure (81) d'au moins l'un des projectiles est du type infrarouge.

5. Système selon l'une des revendications 1 à 4,
**caractérisé par le fait que** le projectile (6) est équipé d'un propulseur (82) logé dans le corps.

6. Système selon l'une des revendications 1 à 5,
**caractérisé par le fait que** ledit tube (5) est au moins agencé approximativement parallèlement à l'axe longitudinal de l'aéronef.

7. Système selon l'une des revendications 1 à 6,
**caractérisé par le fait que** lesdits projectiles (6) à corps cylindriques extérieurs sont montés dans des berceaux de support respectifs, identiques (20), reçus dans ledit tube et ouverts latéralement, et le module d'éjection (8) à passage axial (12) de réception du berceau portant le projectile associé, présente une ouverture latérale (11) à travers laquelle est éjecté le projectile de son berceau par le dispositif d'éjection (25).

8. Système selon la revendication 7,
**caractérisé par le fait que**, à l'intérieur du corps cylindrique (80) commun à chaque projectile, se trouvent, en plus du dispositif de contre-mesure concerné (81) et des empennages déployables (9) en aval du corps, une chambre (34) en liaison avec le dispositif d'éjection (25) du berceau, un mécanisme de verrouillage (35) entre le corps et le berceau, et une connectique électrique (62, 63) pour les ordres de tir et autres données de fonctionnement.

9. Système selon l'une des revendications précédentes 7 et 8,
**caractérisé par le fait que** ledit dispositif d'éjection (25) de chaque projectile est du type pyrotechnique et est agencé dans l'un du berceau ou du projectile, pour éjecter radialement ce dernier à travers l'ouverture latérale (11) du module (8).

10. Système selon l'une des revendications 1 à 9,
**caractérisé par le fait que** les empennages déployables (9) du projectile se présentent sous la forme d'ailettes au moins au nombre de deux.

11. Système selon la revendication précédente,
**caractérisé par le fait que** lesdites ailettes (9) sont reçues dans des fentes latérales (53) du corps cylindrique (80) et sont maintenues en position repliée dans le berceau par une couronne rotative (54) liée au corps et entourant les empennages à ailettes et, par suite de l'éjection du projectile et sous l'action d'un élément élastique (57), la couronne tourne pour présenter ses ouvertures latérales (56) en regard des fentes (53) et entraîner le passage des empennages de la position repliée à la position déployée.

12. Système selon l'une des revendications 7 à 11,
**caractérisé par le fait que**, entre le berceau (20) et le module d'éjection (8), sont prévus des moyens de maintien en position avec immobilisation axiale et transversale du berceau par rapport au module.

## Patentansprüche

1. Täuschsystem, das dazu bestimmt ist, an einem Luftfahrzeug installiert zu werden, und aufweist:
- Täuschgeschosse (6),
- mindestens ein Rohr (5) zur Aufnahme der Täuschgeschosse nacheinander und zum aufeinander folgenden steuerbaren Abschuss derselben, und
- einen Steuermechanismus (7) zur Vorwärtsbewegung der Geschosse in dem Rohr,
- wobei die Täuschgeschosse (6) jeweils zylindrische Außengehäuse (80) mit identischen Abmessungen umfassen, die in dem Rohr aufgenommen werden und jeweils eine aerodynamische Stabilisierungsvorrichtung mit entfaltbarem Leitwerk (9) aufweisen, welches eine zurückgezogene Position in dem Gehäuse einnimmt, wenn sich das Geschoss in dem Rohr befindet, und eine entfaltete Position beim Verlassen desselben, und
- wobei das System ein Geschossauswurfmodul (8) mit axialem Durchgang (12) umfasst, das fest in der Verlängerung des Rohres gegenüber dem Steuermechanismus (6) angeordnet ist und nacheinander, infolge des Steuermechanismus, das aus dem Rohr kommende Geschoss enthält, das durch eine mit dem Modul verbundene steuerbare Auswurfvorrichtung (25) auszuwerfen ist.

2. System nach Anspruch 1,
**dadurch gekennzeichnet, dass** die Geschosse (6) mit zylindrischem Gehäuse (80), die in dem Rohr und dem Modul aufgenommen sind, Täuschvorrichtungen (81) aufweisen, die identisch oder verschieden sind für wenigstens zwei von ihnen.

3. System nach einem der Ansprüche 1 und 2,
**dadurch gekennzeichnet, dass** die Täuschvorrichtung (81) wenigstens eines der Geschosse vom aktiven elektromagnetischen Typ ist.

4. System nach einem der Ansprüche 1 bis 3,
**dadurch gekennzeichnet, dass** die Täuschvorrichtung (81) wenigstens eines der Geschosse vom Infrarottyp ist.

5. System nach einem der Ansprüche 1 bis 4,
**dadurch gekennzeichnet, dass** das Geschoss (6) mit einem Triebwerk (82) ausgestattet ist, das in dem Gehäuse aufgenommen ist.

6. System nach einem der Ansprüche 1 bis 5,
**dadurch gekennzeichnet, dass** das Rohr (5) wenigstens annähernd parallel zur Längsachse des Luftfahrzeugs angeordnet ist.

7. System nach einem der Ansprüche 1 bis 6,
**dadurch gekennzeichnet, dass** die Geschosse (6) mit zylindrischen Außengehäusen in jeweiligen, identischen Haltegestellen (20) angebracht sind, die in dem Rohr aufgenommen und seitlich offen sind, und das Auswurfmodul (8) mit axialem Durchgang (12) zur Aufnahme des das zugeordnete Geschoss tragenden Gestells eine seitliche Öffnung (11) aufweist, durch die hindurch das Geschoss durch die Auswurfvorrichtung (25) aus seinem Gestell ausgeworfen wird.

8. System nach Anspruch 7,
**dadurch gekennzeichnet, dass** sich im Inneren des zylindrischen Gehäuses (80), das allen Geschossen gemeinsam ist, außer der betreffenden Täuschvorrichtung (81) und dem entfaltbaren Leitwerk (9) im hinteren Teil des Gehäuses, eine Kammer (34), die mit der Auswurfvorrichtung (25) des Gestells in Verbindung steht, ein Mechanismus zur Verriegelung (35) zwischen dem Gehäuse und dem Gestell und elektrische Verbindungstechnik (62, 63) für die Schussbefehle und anderen Betriebsdaten befinden.

9. System nach einem der vorhergehenden Ansprüche 7 und 8,
**dadurch gekennzeichnet, dass** die Auswurfvorrichtung (25) jedes Geschosses vom pyrotechnischen Typ ist und entweder in dem Gestell oder in dem Geschoss angeordnet ist, um das Letztere durch die seitliche Öffnung (11) des Moduls (8) hindurch radial auszuwerfen.

10. System nach einem der Ansprüche 1 bis 9,
**dadurch gekennzeichnet, dass** das entfaltbare Leitwerk (9) des Geschosses die Form von Flügeln aufweist, deren Anzahl wenigstens zwei beträgt.

11. System nach dem vorhergehenden Anspruch,
**dadurch gekennzeichnet, dass** die Flügel (9) in seitlichen Schlitzen (53) des zylindrischen Gehäuses (80) aufgenommen sind und in der zurückgezogenen Position in dem Gestell durch einen Drehkranz (54) gehalten werden, der mit dem Gehäuse verbunden ist und das Flügelleitwerk umgibt, und dass sich infolge des Auswurfs des Geschosses und unter der Wirkung eines elastischen Elements (57) der Drehkranz dreht, um seine seitlichen Öffnungen (56) gegenüber den Schlitzen (53) zu positionieren und die Bewegung des Leitwerks aus der zurückgezogenen Position in die entfaltete Position zu bewirken.

12. System nach einem der Ansprüche 7 bis 11,
**dadurch gekennzeichnet, dass** zwischen dem Gestell (20) und dem Auswurfmodul (8) Positionshaltemittel mit axialer Fixierung und Fixierung in Querrichtung des Gestells bezüglich des Moduls vorgesehen sind.

## Claims

1. Counter-measure decoy system designed to be installed on an aircraft comprising:
- counter-measure projectiles (6);
- at least one tube (5) for receiving said counter-measure projectiles in series and for the successive controllable launch of said projectiles; and
- a control mechanism (7) for advancing said projectiles inside said tube,
- said counter-measure projectiles (6) respectively comprising dimensionally identical external cylindrical bodies (80), housed inside said tube and each having a deployable-tail-fin aerodynamic stabilisation device (9), which tail-fins assume a folded position inside the body when said projectile is inside said tube, and a deployed position outside of said tube, and
- said system comprising a projectile ejection module (8), with an axial passage (12), fixedly arranged in the extension of said tube, opposite said control mechanism, and successively containing, after said control mechanism, said projectile (6) to be ejected from said tube by a controllable ejection device (25) connected to said module.

2. System according to claim 1, **characterised in that** said projectiles (6) with cylindrical bodies (80) housed inside said tube and said module have counter-measure devices (81) that are identical or different for at least two of said projectiles.

3. System according to claim 1 or 2, **characterised in that** said counter-measure device (81) of at least one of said projectiles is of the active electromagnetic type.

4. System according to any one of claims 1 to 3, **characterised in that** said counter-measure device (81) of at least one of said projectiles is of the infrared type.

5. System according to any one of claims 1 to 4, **characterised in that** said projectile (6) is equipped with a propulsion unit (82) housed inside said body.

6. System according to any one of claims 1 to 5, **characterised in that** said tube (5) is at least arranged approximately parallel to the longitudinal axis of the aircraft.

7. System according to any one of claims 1 to 6, **characterised in that** said projectiles (6) with external cylindrical bodies are mounted in respective, identical support cradles (20), which are housed inside said tube and laterally open, and said ejection module (8) with an axial passage (12) for receiving said cradle which carries said associated projectile has a lateral opening (11) through which said projectile is ejected from its cradle by said ejection device (25).

8. System according to claim 7, **characterised in that**, in addition to the relevant counter-measure device (81) and the deployable tail-fins (9) downstream of said body, a chamber (34) associated with said device (25) for ejecting from said cradle, a locking mechanism (35) between said body and said cradle and an electrical connector (62, 63) for the firing orders and other operating data are located inside said cylindrical body (80) common to each projectile.

9. System according to any one of claims 7 and 8, **characterised in that** said device (25) for ejecting each projectile is of the pyrotechnic type and is arranged in either the cradle or the projectile in order to radially eject said projectile through said lateral opening (11) of said module (8).

10. System according to any one of claims 1 to 9, **characterised in that** said deployable tail-fins (9) of said projectile are in the form of at least two vanes.

11. System according to the preceding claim, **characterised in that** said vanes (9) are housed inside lateral slots (53) of said cylindrical body (80) and are held in a folded position inside said cradle by a rotary ring (54) connected to said body and surrounding said tail-fin vanes and, following the ejection of said projectile and under the action of a resilient element (57), said ring rotates in order to locate its lateral openings (56) opposite said slots (53) and to cause said tail-fins to move from the folded position to the deployed position.

12. System according to any one of claims 7 to 11, **characterised in that** position retention means are provided between said cradle (20) and said ejection module (8), with axial and transverse immobilisation of said cradle in relation to said module.
